**Europäisches Patentamt**

**European Patent Office**

**Office européen des brevets**

(19)

(11) Veröffentlichungsnummer: **0 149 646**
**B1**

(12) # EUROPÄISCHE PATENTSCHRIFT

(45) Veröffentlichungstag der Patentschrift:
**16.09.87**

(51) Int. Cl.⁴: **A 61 C 1/08**

(21) Anmeldenummer: **84902692.7**

(22) Anmeldetag: **12.07.84**

(86) Internationale Anmeldenummer:
**PCT/AT 84/00027**

(87) Internationale Veröffentlichungsnummer:
**WO 85/00281 (31.01.85** Gazette 85/3)

(54) **ZAHNÄRZTLICHES HANDSTÜCK.**

(30) Priorität: **14.07.83 AT 2583/83**

(43) Veröffentlichungstag der Anmeldung:
**31.07.85 Patentblatt 85/31**

(45) Bekanntmachung des Hinweises auf die Patenterteilung:
**16.09.87 Patentblatt 87/38**

(84) Benannte Vertragsstaaten:
**CH DE FR LI**

(56) Entgegenhaltungen:
**GB - A - 2 092 450**
**GB - A - 2 118 838**
**US - A - 4 375 964**
**US - A - 4 403 956**

(73) Patentinhaber: **DENTALWERK BÜRMOOS GESELLSCHAFT M.B.H., Ignaz Glaser-Strasse 53, A-5111 Bürmoos (AT)**

(72) Erfinder: **MALATA, Peter, Ignaz Glaser-Strasse 55, A-5111 Bürmoos (AT)**
Erfinder: **ROSENSTATTER, Otto, Matzing 105, A-5164 Seeham (AT)**

(74) Vertreter: **Barger, Erich et al, Patentanwälte Dipl.-Ing. Erich Barger Dipl.-Ing. Hermann Krick Biberstrasse 15, A-1010 Wien (AT)**

## Beschreibung

Die Erfindung bezieht sich auf ein zahnärztliches Handstück mit einer Griffhülse, die mindestens einen im Bereich des Handstückkopfteiles aus dieser auf das Zahnbehandlungswerkzeug gerichtet austretenden, somit zur Gänze innerhalb der Griffhülse verlaufenden und am rückwärtigen Ende an eine Lichtquelle angeschlossenen strangförmigen Lichtleiter aufweist und einem lösbar und gegenüber der Griffhülse frei drehbar angeordneten Anschlussstück für den Anschluss an den Endkörper eines Versorgungsschlauches für die Versorgungsmedien des Handstückes, wobei das Anschlussstück mit einmündenden und hindurchgehenden Mediendurchtrittskanälen versehen ist, die mit zu den Verbrauchsstellen des Handstückes führenden Medienleitungen der Griffhülse verbindbar sind.

Gemäss der GB-A-2 092 450 befindet sich bei einem bekannten Handstück dieser Art die Lichtquelle zentrisch am vorderen Ende des Verbindungsstückes. Dementsprechend endet der Lichtleiter am werkzeugfernen Ende des Handstückes ebenfalls zentrisch, so dass bei eingeführtem Anschlussstück die Lichtquelle dem Lichtleiterende gegenüberliegt. Durch diese Anordnung ist es erforderlich, die im Anschlussstück befindlichen Kanäle für die Versorgungsmedien radial ausstreten zu lassen, was einen umständlichen Verlauf dieser Kanäle sowohl im Anschlussstück als auch in der Griffhülse notwendig macht.

Die Erfindung bezweckt, den einfachen Verlauf dieser Kanäle beizubehalten, was erfindungsgemäss dadurch gelingt, dass die Lichtquelle in der Griffhülse angeordnet ist. Der dadurch erforderlich werdende Anschluss der Lichtquelle an die Stromquelle kann mittels einer an sich bekannten Kontaktanordnung zwischen Griffhülse und Anschlussstück erfolgen, die die freie Verdrehbarkeit von Griffhülse und Anschlussstück gestattet. Gegen die Anordung der Lichtquelle im Griffstück herrscht die Auffassung, dass dadurch die Sterilisation erschwert bzw. die Lichtquelle durch die Sterilisation beeinträchtigt werden könnte. Die praktische Erprobung beweist, dass diese Auffassung unzutreffend ist.

Weiters ist ein Handinstrument bekannt geworden, bei dem sich an die übliche Griffhülse ein Übergangsstück sowie eine Lampenkammer anschliesst, die mit dem Versorgungsschlauch verbindbar ist. Da diese Teile starr miteinander verbunden sind, wird das Instrument schwer und unhandlich, ein unerwünscher Effekt, der noch dadurch verstärkt wird, dass sich am überlangen Ende des Instrumentes der Schlauch anschliesst und daher mit seinem Gewicht eine erhebliche Beanspruchung der Hand herbeiführt, so dass die genaue Führung des Werkzeuges am Zahn erschwert ist. Die vorstehend genannten Ziele der Erfindung sollen ohne Veränderung der Länge des Instrumentes und seines Gewichtes herbeigeführt werden.

Die Erfindung ist demnach bei einem Handstück der eingangs beschriebenen Art dadurch gekennzeichnet, dass die Lichtquelle in einer in der Griffhülse, vorzugsweise exzentrisch, liegenden Ausnehmung angeordnet und mit mindestens einer Stromleitung elektrisch verbunden ist, die mittels einer an sich bekannten, eine gegenseitige Verdrehung von Griffhülse und Anschlussstück gestattenden Kontaktanordnung mit einer das Anschlussstück durchsetzenden Stromleitung verbindbar ist, die am werkzeugfernen Ende des Anschlussstückes einen Kontakt zum Anschluss an einen Gegenkontakt im Versorgungsschlauch-Endkörper aufweist.

Die Erfindung bezieht sich ferner auf Ausgestaltungen des neuen Handstückes.

In der Zeichnung ist der Gegenstand der Erfindung in einer beispielsweisen Ausführungsform dargestellt. Es zeigen Fig. 1 Griffhülse samt Kopfteil, teilweise im Schnitt, Fig. 2 das Anschlussstück im Längsschnitt und Fig. 3 den Versorgungsschlauch-Endkörper ebenfalls teilweise geschnitten.

Das in seiner Gesamtheit mit 1 bezeichnete Handstück besteht aus einer zweiteiligen Griffhüse 2 und einem darin befindlichen Griffhülsenkörper 3 sowie einem Kopfteil 4, der ein druckluftbetriebenes Antriebsaggregat aufweist, in dessen Rotorwelle ein Werkzeug 5 einsetzbar ist. Die Griffhülse weist mehrere Kanäle 6, 7 auf, durch die die für Antrieb und Kühlung benötigten Medien dem Kopfteil 4 zugeleitet werden. Der Griffhülsenkörper ist mit einer zentralen, abgestuften Bohrung 8 versehen, in die ein mit einem Zapfen 9 versehenes Anschlussstück 10 einsetzbar ist. Der Hülsenkörper 3 weist ferner eine Ausnehmung 11 auf, in die ein Isolierkörper 12 eingesetzt ist, welcher den Lampensockel 13 für die Lichtquelle 14 trägt. Der Isolierkörper 12 ist von zwei Leitungen 15 durchsetzt, deren Enden zu Kontakten 16, 17 verformt sind, welche die Wand der zentralen Bohrung 8 durchsetzen und federnd in diese Bohrung hineinragen. Im Hülsenkörper 3 ist ferner ein Lichtleiter 18 eingesetzt, dessen Stirnfläche der Lichtquelle 14 gegenüberliegt. Er geht in zwei weitgehend parallel verlaufende Teillichtleiter 19, 20 über, die in der Nähe des Kopfteiles 4 aus der Griffhülse bei 21 austreten und auf das Werkzeug 5 gerichtet sind.

Das Anschlussstück 10 ist ebenfalls mit mehreren Kanälen 22, 23, 24 zur Durchleitung der Anstriebsund Kühlmedien versehen, von denen die Kanäle 22, durch eine nicht dargestellte Bohrung miteinander verbunden sind. Diese Kanäle gehen von Anschlussstutzen 25, 26 aus, die mit entsprechenden Ausmündungen 27, 28 im Versorgungsschlauch-Endkörper 29 einsetzbar sind. Das Anschlussstück weist eine glockenförmige, mit Haken 30 versehene Hülse 31 auf, die mittels nicht dargestellter Schlitze federnd ausgebildet ist. Beim Einführen des Zapfens 9 des Anschlussstückes 10 gleiten die Haken 30 über einen Ring 32, der mit der Griffhülse 2 über einen Kugelkranz 33 verbunden ist. Auf diese Weise sind Griffhülse und Anschlussstück frei gegeneinander verdrehbar.

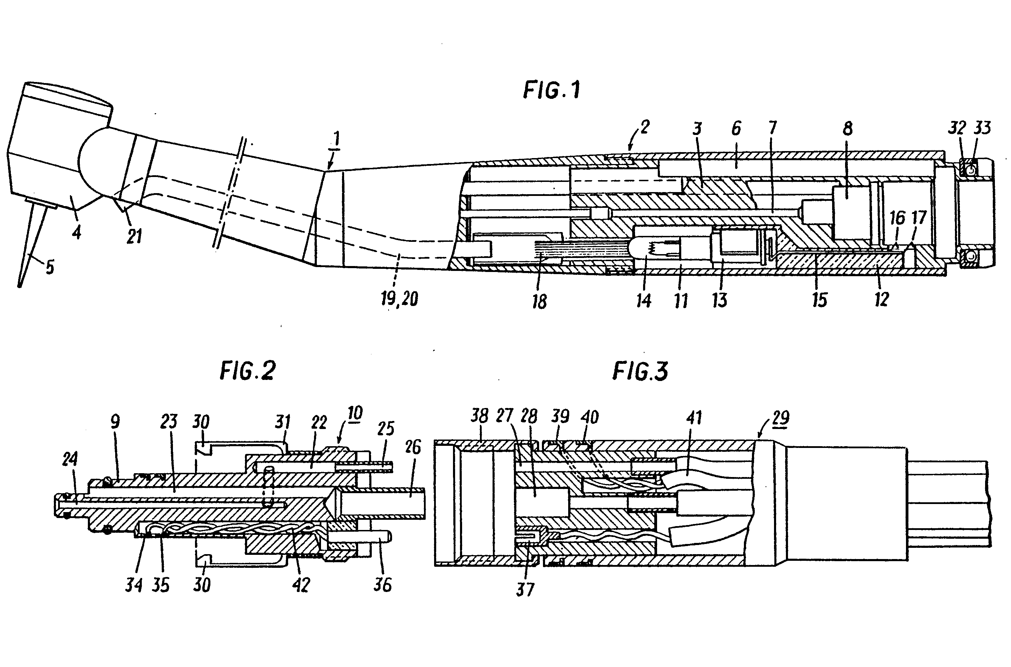

Zusätzlich weist der Zapfen 9 des Anschlussstückes 10 zwei Schleifringe 34, 35 auf, die elektrisch leitend bei 42 mit zwei Steckerstiften 36, die in Fig. 2 hintereinanderliegen, verbunden sind. Diese Stifte 36 greifen in federnde Hülsen 37 ein, wenn der Versorgungsschlauch-Endkörper 29 mittels der Überwurfmutter 38 mit dem Anschlussstück 10 verbunden wird.

Ist das Anschlussstück in die Griffhülse eingesetzt, so liegen die beiden Schleifringe 34, 35 im axialen Bereich der Kontakte 16, 17, so dass sich eine Kontaktanordnung ergibt, die die freie Verdrehbarkeit zwischen Anschlussstück 10 und Griffhülse 2 nicht beeinträchtigt.

Der Versorgungsschlauch-Endkörper 29 weist zwei Metallringe 39, 40 auf, die an eine Steuerleitung 41 angeschlossen sind, die zu einem Schalter für den Lichtstromkreis führt. Durch Berühren der beiden Ringe 39, 40 mittels eines Fingers wird in bekannter Weise der Schalter betätigt und die Lichtquelle alternierend ein- und ausgeschaltet.

Die Erfindung ist nicht auf das dargestellte Ausführungsbeispiel beschränkt. So kann Griffhülse und Anschlussstück aus elektrisch leitendem Material bestehen und als Stromleiter bis zum Versorgungsschlauch-Endkörper dienen. Hierbei ist es zweckmässig, diesen Stromleiter an Masse zu legen bzw. zu erden. Es genügt dann eine einzige weitere Stromleitung, so dass sich ein Schleifring und ein Schleifkontakt erübrigen. Die Ausbildung kann jedoch auch so getroffen werden, dass in diesem Falle die Kontakte zentrisch an der Stirnseite des Zapfens 9 des Anschlussstückes 10 bzw. am Boden der Bohrung 8 angeordnet sind. Es ist aber auch eine Kombination dieses Kontaktpaares mit einem Schleifring und Schleifkontakt möglich. Anstelle des beschriebenen induktiv betätigbaren Schalters für den Lichtstromkreis kann im Versorgungsschlauch-Endkörper 29, im Anschlussstück 10 oder an der Griffhülse 2 ein anderer Schalter vorgesehen werden. Es können aber auch die Ringe 39, 40 am Anschlusskörper oder an der Griffhülse 2 angeordnet werden, was allerdings eine Überbrückung mittels weiterer Kontakte zwischen den genannten Teilen erforderlich macht.

Anstelle einer Gabelung des Lichtleiters 18 kann sich dieser einheitlich bis zur Stelle 21 erstrecken, so dass das Werkzeug 3 nur von einem Lichtstrahl beleuchtet wird.

**Patentansprüche**

1. Zahnärztliches Handstück (1) mit einer Griffhülse (2), die mindestens einen im Bereich des Handstückkopfteiles (4) aus dieser auf das Zahnbehandlungswerkzeug (5) gerichtet austretenden, somit zur Gänze innerhalb der Griffhülse verlaufenden und am rückwärtigen Ende an eine Lichtquelle (14) angeschlossenen strangförmigen Lichtleiter (18) aufweist und einem lösbar und gegenüber der Griffhülse frei drehbar angeordneten Anschlussstück (10) für den Anschluss an den Endkörper (29) eines Versorgungsschlauches für die Versorgungsmedien des Handstückes, wobei das Anschlussstück mit einmündenden und hindurchgehenden Mediendurchtrittskanälen (22, 23, 24) versehen ist, die mit zu den Verbrauchstellen des Handstückes führenden Medienleitungen (6, 7) der Griffhülse verbindbar sind, dadurch gekennzeichnet, dass die Lichtquelle (14) in einer in der Griffhülse (2), vorzugsweise exzentrisch, liegenden Ausnehmung (11) angeordnet und mit mindestens einer Stromleitung (15) elektrisch verbunden ist, die mittels einer an sich bekannten, eine gegenseitigen Verdrehung von Griffhülse und Anschlussstück (10) gestattenden Kontaktanordnung (16, 17, 34, 35) mit einer das Anschlussstück durchsetzenden Stromleitung (42) verbindbar ist, die am werkzeugfernen Ende des Anschlussstückes einen Kontakt (36) zum Anschluss an einen Gegenkontakt im Versorgungsschlauch-Endkörper (29) aufweist.

2. Handstück nach Anspruch 1, dadurch gekennzeichnet, dass die Kontaktanordnung aus zwei Schleifringen (34, 35) und zwei Schleifkontakten (16, 17) besteht.

3. Handstück nach Anspruch 2, dadurch gekennzeichnet, dass die Schleifringe (34, 35) am Anschlussstück (10) und die Schleifkontakte (16, 17) in der Griffhülse (2) vorgesehen sind.

4. Handstück nach Anspruch 1, dadurch gekennzeichnet, dass die Griffhülse (2) und das Anschlussstück (10) aus elektrisch leitendem Material bestehen und Teil des Lichtstromkreises bilden.

5. Handstück nach einem der Ansprüche 1 bis 4, dadurch gekennzeichnet, dass an der Griffhülse (2), am Anschlussstück (10) oder am Versorgungsschlauch-Endkörper (29) ein Schalter (39, 40), vorzugsweise ein induktiv wirkender Schalter für den Stromkreis der Lichtquelle (14) vorgesehen bzw. über eine Steuerleitung (41) angeschlossen ist.

**Claims**

1. A dental tool holder (1) comprising a grip socket (2) comprising at least one string-like fibre-optic light guide (18) extending from the head part (4) of the tool-holder towards the dental tool (5), i.e disposed entirely inside the grip socket and connected at the rear to a light source (14), the tool-holder also comprising a releasable connecting member (10), freely rotatable relative to the grip socket, for connecting to the end member (29) of a pipe for supplying media to the tool-holder, the connecting member being formed with entering and through ducts (22, 23, 24) for the media, connectable to media pipes (6, 7) in the grip socket leading to the places where the tool-holder is used, characterized in that light source (14) is disposed in a preferably eccentric recess (11) in the grip socket (2) and electrically connected to at least one conductor (15) which, by means of a known contact system (16, 17, 34, 35) allowing the socket to rotate relative to the connecting member (10), can be connected to a conductor (42) which extends through the connecting member and, at the end of the connecting member remote from the tool, has a contact (36) for connecting to a cooperating contact in the end member (29) of the supply pipe.

2. A tool-holder according to claim 1, characterized in that the contact system comprises two slip rings (34, 35) and two sliding contacts (16, 17).

3. A tool-holder according to claim 2, characterized in that the slip rings (34, 35) are disposed on the connecting member (10) and the sliding contacts (16, 17) in the grip socket (2).

4. A tool-holder according to claim 1, characterised in that the grip socket (2) and the connecting member (10) are made of electrically conducting material and form part of the light circuit.

5. A tool-holder according to any of claims 1 to 4, characterized in that a switch (39, 40), preferably an inductively operating switch for the circuit of the light source (4) is provided on the grip socket (2) or the connecting member (10) or the end member (29) of the supply pipe, or is connected via a control line (41).

## Revendications

1. Porte-outil dentaire (1) comportant une douille-poignée (2) qui présente au moins un conducteur optique (18) en forme de boyau, sortant de la partie de tête (4) du porte-outil, en direction de l'outil (5) de traitement dentaire, dans la zone de cette partie de tête (4) du porte-outil, passant entièrement à l'intérieur de la douille-poignée et raccordé, à son extrémité arrière, à une source lumineuse (14), ainsi qu'un raccord (10), disposé de façon à pouvoir être détaché et tourner librement par rapport à la douille-poignée, pour le raccordement à la pièce d'extrémité (29) d'un tube souple d'alimentation pour les fluides d'alimentation du porte-outil, étant précisé que le raccord comporte des canaux (22, 23, 24) de passage des fluides qui se raccordent, traversent le raccord et que l'on peut raccorder aux conduites (6, 7) de fluides de la douille-poignée qui conduisent aux emplacement utilisateurs du porte-outil, caractérisé en ce que la source lumineuse (14) est disposée dans un évidement (11) situé dans la douille-poignée (2), de préférence excentriquement et est reliée électriquement à au moins un conducteur de courant (15) que l'on peut relier, au moyen d'une disposition de contacts (16, 17, 34, 35) connue en soi, autorisant une rotation relative de la douille-poignée et du raccord (10), avec un conducteur de courant (42) qui traverse le raccord et qui présente, à l'extrémité du raccord éloignée de l'outil, un contact (36) pour le raccordement à un contre-contact qui se trouve dans la pièce d'extrémité (29) du tube souple d'alimentation.

2. Porte-outil selon la revendication 1, caractérisé en ce que la disposition de contacts est constituée de deux bagues de contact (34, 35) et de contacts à frottement (16, 17).

3. Porte-outil selon la revendication 2, caractérisé en ce que les bagues de contact (34, 35) sont prévues sur le raccord (10) et les contacts à frottement (16, 17) dans la douille-poignée (2).

4. Porte-outil selon la revendication 1, caractérisé en ce que la douille-poignée (2) et le raccord (10) sont constitués de matériau électriquement conducteur et font partie du circuit électrique pour la lumière.

5. Porte-outil selon l'une des revendications 1 à 4, caractérisé en ce qu'un interrupteur (39, 40), de préférence un interrupteur agissant par induction, pour le circuit électrique de la source lumineuse (14) est prévu sur la douille-poignée (2), sur le raccord (10) ou sur la pièce d'extrémité (29) du tube souple d'alimentation, ou bien leur est relié par l'intermédiaire d'un conducteur de commande (41).

FIG.1

FIG.2

FIG.3

0 149 646